# EUROPEAN PATENT SPECIFICATION

(11) **EP 4 071 449 B1**
(45) Date of publication and mention of the grant of the patent: **21.08.2024**
(21) Application number: 22166959.1
(22) Date of filing: 06.04.2022
(51) Int. Cl.: G01G 19/02, G01L 17/00, H04N 7/18

(54) **WEIGHTING SYSTEM AND WEIGHTING METHOD FOR A VEHICLE**
GEWICHTUNGSSYSTEM UND GEWICHTUNGSVERFAHREN FÜR EIN FAHRZEUG
SYSTÈME ET PROCÉDÉ DE PESÉE POUR UN VÉHICULE

(30) Priority: 08.04.2021 IT 202100008822
(43) Date of publication of application: 12.10.2022
(73) Proprietor: IVECO S.P.A., 10156 Torino (IT)
(72) Inventor: SANCHEZ GALLEGO, Jaime, 10156 Torino (IT)
(74) Representative: Studio Torta S.p.A.

(56) References cited:
- EP-A1- 3 228 511
- WO-A1-2020/121306
- CN-A- 111 735 524

## Description

### TECHNICAL FIELD

The present invention concerns a weighting system and related weighting method for a vehicle.

The present invention finds its preferred, although not exclusive, application in a commercial vehicle. Reference will be made to this application by way of example below, being clear that the proposed weighting system and weighting method of the invention may be used in other typologies of vehicles.

### BACKGROUND OF THE INVENTION

Knowledge of the mass of vehicles, such as commercial vehicles (e.g. a truck), is important for electronic logic systems and components (for example, the automatic transmission logic or the pneumatic stabilization system) so as to perform different operations, such as braking or activating the suspensions.

Moreover, mass estimation is a crucial parameter for Platoon driven vehicles, in particular to allow an automatic braking of the driven vehicles.

In order to allow the aforementioned operations or to allow an automatic driving of the vehicle, the precision of the estimation of the mass of the vehicle must be at least 95%.

Thanks to known systems, such estimation is performed by means of dynamic equations of the vehicle, wherein an acceleration signal is used to derive the mass of the vehicle. However, such known systems are not sufficiently precise.

Other known systems used direct weight sensors that, however, are extremely costly and needs to specifically design their disposition on the vehicle, e.g. with other sensors system of the vehicle. Moreover, they clearly reduce the useful space on the vehicle and increase the manufacturing time.

Document EP 3 228 511 A1 discloses a driver assistance apparatus for a vehicle.

A system for estimating mass of the vehicle via image acquisition means is shown in CN111735524 A1, that however is unprecise.

Therefore, the need is felt to provide a system for estimating the mass of a vehicle in a precise, compact and cost-effective way.

An aim of the present invention is to satisfy the above mentioned needs.

### SUMMARY OF THE INVENTION

The aforementioned aim is reached by a vehicle provided with a weighting system and a method as claimed in the appended set of claims.

### BRIEF DESCRIPTION OF DRAWINGS

For a better understanding of the present invention, a preferred embodiment is described in the following, by way of a non-limiting example, with reference to the attached drawings wherein:
- Figure 1 is a perspective schematic view of a vehicle provided with a weighting system according to the invention;
- Figure 2 is a lateral schematic view of the weighting system of the invention; and
- Figure 3 is a longitudinal view of the weighting system of figure 2.

### DETAILED DESCRIPTION OF THE INVENTION

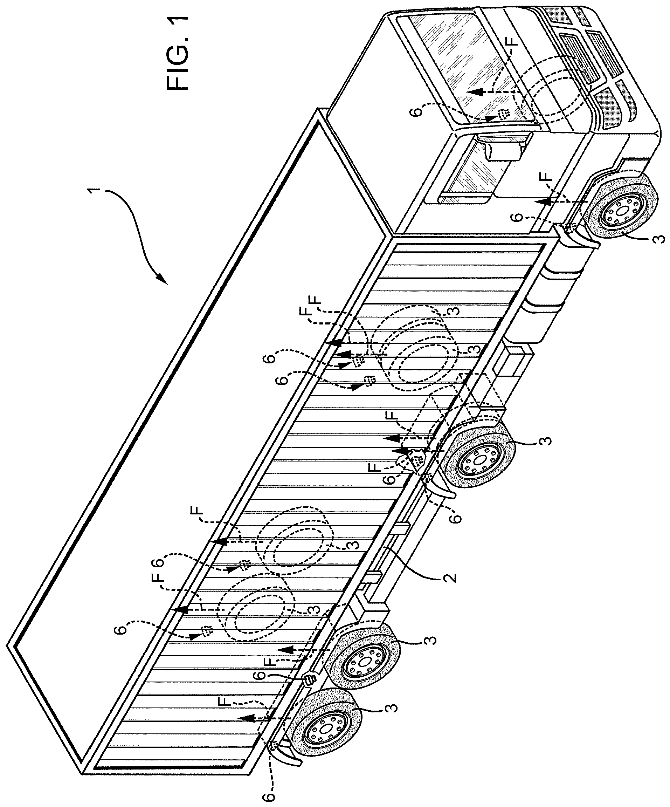

Figure 1 discloses a vehicle 1, for instance a commercial vehicle, e.g. a truck. As known, vehicle 1 comprises a chassis 2 that is movable on the ground G via a plurality of wheels 3 that are rotatably carried by a respective axle 4 about its longitudinal axis A. Always as known, the axle 4 is connected by an axle system 5 to the chassis 2, e.g. a suspension system.

In the following with the term "wheel" is defined a wheel system provided with a tire, as known, housed about a rim fixedly carried to a disk that is carried by the axle 4.

The vehicle 1 comprises a weighting system 6 provided with image acquisition means 7 configured to detect an image of the wheel 3 and its neighboring and an electronic unit (not shown).

The electronic control unit is electrically connected, e.g. by wire or wireless, to the image acquisition means 7 in order to acquire the image detected by the image acquisition means 7 and comprises elaboration means configured to elaborate such image to determine a load acting on the wheel 3 and, consequently in function of the load acting on each wheel 3 of the vehicle 1, the weight of the vehicle 1.

In particular, the image acquisition means 7 comprise a standard camera that is carried, preferably in fixedly manner, to chassis 2 and that is directional to acquire an image of the entire wheel 3, and its neighboring, in a longitudinal direction of the vehicle 1.

The elaboration means of electronic control unit are furthermore configured to memorize dimensional data related to the vehicle 1 in a preset weighting condition, e.g. an unloaded condition of the vehicle. Examples of such data are defined in the following.

In greater detail, each wheel 3 may be provided with a dedicated image acquisition means 7 that are all connected to a single electronic control unit. Preferably, such electronic control unit may be the ECU of vehicle 1.

The image acquisition means 7 are configured to detect an image that is vertically extended from a portion fixed to the chassis 2 and ground G and laterally configured to detect the entire width of the wheel 3. In particular, such portion fixed to chassis 2 may be a portion of the aforementioned axle system 5 or the chassis 2 itself.

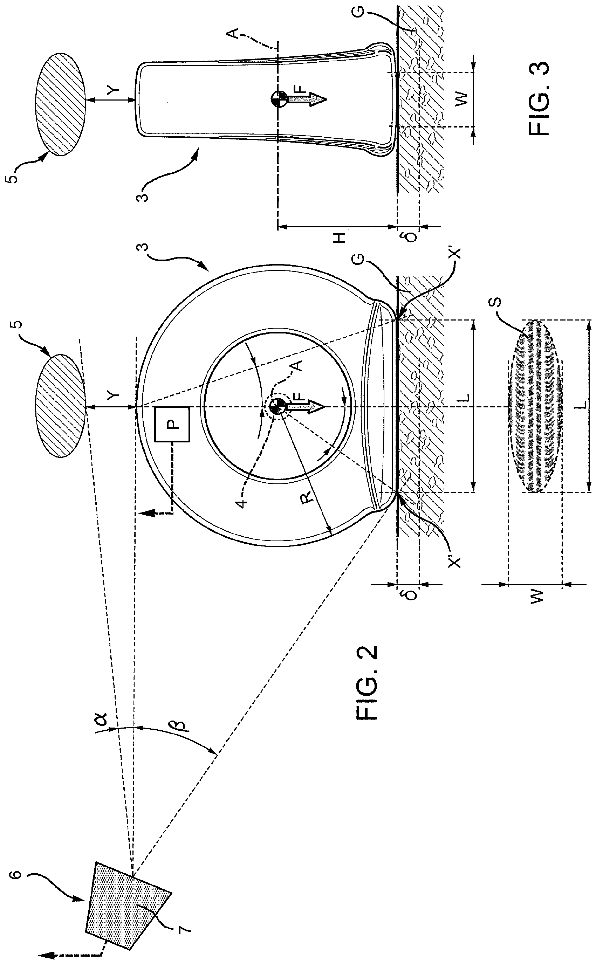

Making reference to figure 2, the image acquisition means 7 is configured to detect an image that can be elaborated by the electronic control unit to retrieve the inclination angles α, β between the image acquisition means 7 position and, respectively the portion fixed to chassis 2 and the rear wheel contact point X'.

As said, the electronic control unit is configured to store dimensional vehicle data. In particular, among the aforementioned dimensional data, electronic control unit is configured to memorize the wheel external radius R, the vertical unloaded position of the external surface of the wheel 3 with respect to the portion fixed to chassis 2 and the longitudinal distance of axle 4, i.e. of axis A, with respect to image acquisition means 7.

In this way, thanks to trigonometric relationships, the loaded vertical distance Y of the external surface of the wheel 3 with respect to the portion fixed to chassis 2 may be determined (e.g. as sinus of angle α multiplied by longitudinal distance of the axle 4).

Similarly, the compressed height δ of the wheel 3 may be calculated knowing a priori the unloaded distance of the external surface of the wheel 3 with respect to the portion fixed to chassis 2, the loaded distance Y and the radius value R.

Once estimated the compressed height δ, thanks to the inclination angle β, the compressed distance L, i.e. the distance between rear wheel contact point X' and a front wheel contact point X" may be calculated similarly to the above.

Making reference to figure 3, the image acquisition means 7 is configured to detect an image that can be elaborated by the electronic control unit to retrieve the vertical position of the center of rotation of wheel 3 with respect to the ground, i.e. a height H, and the maximum lateral extension W of the wheel, i.e. in the portion of the wheel touching ground G.

In particular, such height and lateral extension H, W may be calculated by knowing nominal height and width of the tire and the angles detected by camera, similarly to what described in the preceding paragraphs.

According to the above, the electronic control unit may estimate a wheel contact surface S, i.e. the area of wheel 3 that is in contact to ground that has width W and a length L.

Furthermore, the weighting system comprises pressure sensor means configured to detect a pressure P value of the wheel, i.e. the pressure in the tire. The electronic control unit is configured to be electrically connected to such pressure sensor means. In particular, they can be represented by a TPMS (tire-pressure monitoring system) of the wheel 3.

The electronic control unit is therefore configured to calculate the force F applied to the wheel 3 from axle 4 in function of the pressure P value in wheel 3 and in function of the area of the estimated wheel contact surface S.

In particular, such estimation may be achieved in different ways. In a first exemplarily way, the force F may be estimated via experimental tables, memorized in electronic control unit, specific for a wheel 3, that relate together the force acting on a wheel for a specific tire pressure.

In a second exemplarily alternative way, the force F may be estimated thanks to mathematical relationship, memorized in electronic control unit. Such mathematical relationship take into account, as well as ground contact area and inner tire pressure, and physical tire properties such as geometry and material composition.

In a further way, a mix of experimental tables and mathematical relationships of the elaborated parameters may be used.

Since all wheels 3 of the vehicle are provided with image acquisition means 7 as described above, the control unit may estimate the force F acting on each wheel 3.

Accordingly, since the electronic control unit has memorized the width of each axle 4, the force acting on the front and rear axles may be calculated in function of the force acting on each wheel 3, via equilibrium of forces equations.

Finally, the load of the vehicle may be calculated in function of the force acting on the axles, being known the longitudinal distance between these latter, via equilibrium of forces equations.

In view of the above, the invention is furthermore related to a method for estimating the weight of a vehicle comprising the following steps:
- (i) Acquiring an image of the wheel of a vehicle;
- (ii) Estimate loaded geometrical parameters of the wheel 3 in function of the image acquired in step (i) and in function of memorized preset geometrical parameters of the wheel;
- (iii) Estimate a ground contact area in function of the loaded geometrical parameters estimated in step (ii);
- (iv) Acquire data related to the pressure value in said wheel;
- (v) Estimate the force acting on each wheel in function of the ground contact area estimated in step (iii) and of the data related to pressure acquired in step (iv);
- (vi) calculate the weight of the vehicle in function of the forces estimated in step (v).

In particular, the calculus at point (vi) may further comprise:
- (vi-a) calculating the force on each axle in function of the force acting on each wheel and the transversal distance between the wheels carried by the vehicle; and
- (vi-b) calculating the weight of the vehicle in function of the force acting on each axle and the longitudinal distance between such axles.

The aforementioned method may be executed by a software code memorized in the electronic control unit according to a preset condition.

Such preset condition may be a time interval or a distance travelled by the vehicle 1.

In view of the foregoing, the advantages of the weighting system and weighting method according to the invention are apparent.

The proposed system is economic and compact and has a high accuracy.

In particular, the proposed system may be added on already existing vehicle because no important modification are needed but simply the installation of a camera in neighboring of a wheel.

Furthermore, the camera may be, in addition, used for controlling the status of each tire thereby monitoring the operation status of each wheel or of the suspension assembly status.

It is clear that modifications can be made to the described weighting system and weighting method which do not extend beyond the scope of protection defined by the claims.

For example, the image acquisition means may be substituted by other typologies of camera.

The detected geometrical parameters and relates examples of parameters estimations may be varied according to the necessity of the wheel typology and system.

## Claims

1. Vehicle (1) provided with a chassis (2) that is movable on ground via a plurality of wheels (3) carried by axles (4) connected to the chassis (2) via respective axle system (5), each wheel being provided with pressure sensor means configured to acquire data related to the pressure (P) of said wheel (3),
said vehicle (1) comprising a weighting system (6) comprising image acquisition means (7) for each of said wheels (3) and an electronic control unit electronically connected to said image acquisition means (7) and to said pressure sensor means,
wherein said image acquisition means (7) are carried by said chassis (2) and configured to acquire an image of the respective wheel (3) in a longitudinal direction of said vehicle (1),
wherein said electronic control unit comprises elaboration means configured to memorize dimensional parameters of said vehicle (1) and configured to elaborate said image acquired by said image acquisition means (7) in function of said dimensional parameters,
**characterized in that** said electronic control unit being configured to estimate the load (F) acting on said wheel (3) on the base of said pressure (P) of said wheel (3) and on the base of said elaboration of said image acquired by said image acquisition means (7),
said electronic control unit being configured to estimate the weight of said vehicle (1) on the base of the load (F) acting on each wheel (3).

2. .- Vehicle according to claim 1, wherein said image acquisition means (7) comprise a camera.

3. .- Vehicle according to claim 1 or 2, wherein said electronic control unit is a ECU of said vehicle (1).

4. .- Vehicle according to any of claims 1 to 3, wherein said sensor means are part of a tire pressure management system, TPMS, of said vehicle (1).

5. .- Vehicle according to any of the preceding claims, wherein said dimensional parameters of said vehicle (1) comprises at least the longitudinal distance of said image acquisition means (7) with respect to the respective axle (4), the external radius (R) of said wheel (3) and a vertical distance between the external surface of said wheel (3) and a portion fixed to said chassis (2) according to a preset load condition of said vehicle.

6. .- Vehicle according to any of the preceding claims, wherein said elaboration of said image acquired by said image acquisition means (7) in function of said dimensional parameters by said electronic control unit is aimed to estimate the contact area (S) of said wheel (3) on ground (G).

7. .- Vehicle according to claim 6, wherein said load (F) acting on said wheel (3) is estimated by a mathematical function, memorized in said electronic control unit, dependent on said detected pressure (P), said contact area (S) and tire geometrical and physical parameters.

8. .- Vehicle according to claim 6 or 7, wherein said load (F) acting on said wheel (3) is estimated by tabled values, memorized in said electronic control unit for a specific tire, that relate together said detected pressure (P) and said contact area (S).

9. .- Vehicle according to any of the preceding claims, wherein the control unit is configured to estimate the weight of said vehicle according to a predefined condition.

10. .- Vehicle according to claim 9, wherein said predefined condition may be a preset time interval or a preset distance travelled by said vehicle.

11. . Method for estimating the weight of a vehicle comprising the following steps:
• (i) Acquiring an image of each wheel of a vehicle;
• (ii) Estimate loaded geometrical parameters of the wheel in function of the image acquired in step (i) and in function of memorized preset geometrical parameters of the wheel;
• (iii) Estimate a ground contact area in function of the loaded geometrical parameters estimated in step (ii);
• (iv) Acquire data related to the pressure value in said wheel;
• (v) Estimate the force acting on each wheel in function of the ground contact area estimated in step (iii) and of the data related to pressure acquired in step (iv);
• (vi) Calculate the weight of the vehicle in function of the forces estimated in step (v).

12. . Method according to claim 11, wherein said step (vi) comprising the following steps:
• (vi-a) calculating the force on each axle in function of the force acting on each wheel and the transversal distance between the wheels carried by the vehicle; and
• (vi-b) calculating the weight of the vehicle in function of the force acting on each axle and the longitudinal distance between such axles.

13. .- Electronic control unit for a vehicle comprising elaboration means configured to memorize a software code configured to execute the method according to claims 11 or 12.

## Patentansprüche

1. Fahrzeug, mit einem Fahrgestell (2), welches auf dem Boden mittels einer Mehrzahl von Rädern (3) beweglich ist, die von Achsen (4) getragen werden, die mit dem Fahrgestell (2) durch ein entsprechendes Achssystem (5) verbunden sind, wobei jedes Rad mit Drucksensormitteln ausgestattet ist, ausgebildet zur Erfassung von Daten bezüglich des Drucks (P) des Rades (3),
welches Fahrzeug (1) ein Wiegesystem (6) umfasst, umfassend Bilderfassungsmittel (7) für jedes der Räder (3) und eine elektronische Steuereinheit, die elektronisch mit den Bilderfassungsmitteln (7) und mit den Drucksensormitteln verbunden ist,
wobei die Bilderfassungsmittel (7) durch das Fahrgestell (2) getragen werden und dazu ausgebildet sind, ein Bild des jeweiligen Rades (3) in einer Längsrichtung des Fahrzeugs (1) zu erfassen,
wobei die elektronische Steuereinheit Verarbeitungsmittel umfasst, dazu ausgebildet, Abmessungsparameter des Fahrzeugs (1) zu speichern, und ausgebildet, das von den Bilderfassungsmitteln (7) erfasste Bild als Funktion der Abmessungsparameter zu verarbeiten,
**dadurch gekennzeichnet, dass** die elektronische Steuereinheit dazu ausgebildet ist, die Last (F), die auf das Rad (3) wirkt, auf Grundlage des Drucks (P) des Rades (3) und auf Grundlage der Verarbeitung des von den Bilderfassungsmitteln (7) erfassten Bildes zu schätzen,
wobei die elektronische Steuereinheit dazu ausgebildet ist, das Gewicht des Fahrzeugs (1) auf Grundlage der Last (F), die auf jedes Rad (3) wirkt, zu schätzen.

2. Fahrzeug gemäß Anspruch 1, bei welchem die Bilderfassungsmittel (7) eine Kamera umfassen.

3. Fahrzeug gemäß Anspruch 1 oder 2, bei welchem die elektronische Steuereinheit das elektronische Steuergerät (ECU) des Fahrzeugs (1) ist.

4. Fahrzeug gemäß einem der Ansprüche 1 bis 3, bei welchem die Sensormittel Teil eines Reifendruckkontrollsystems (TPMS) des Fahrzeugs (1) sind.

5. Fahrzeug gemäß einem der vorhergehenden Ansprüche, bei welchem die Abmessungsparameter des Fahrzeugs (1) zumindest den Längsabstand der Bilderfassungsmittel (7) von der jeweiligen Achse (4), den Außenradius (R) des Rades (3) und einen vertikalen Abstand zwischen der äußeren Oberfläche des Rades (3) und einem am Fahrgestell (2) befestigten Teil entsprechend einem vorbestimmten Lastzustand des Fahrzeugs umfassen.

6. Fahrzeug gemäß einem der vorhergehenden Ansprüche, bei welchem die Verarbeitung des von den Bilderfassungsmitteln (7) erfassten Bildes als Funktion der Abmessungsparameter durch die elektronische Steuereinheit darauf gerichtet ist, die Kontaktfläche (S) des Rades (3) auf dem Untergrund (G) zu schätzen.

7. Fahrzeug gemäß Anspruch 6, bei welchem die Last (F), die auf jedes Rad (3) wirkt, mittels einer mathematischen Funktion geschätzt wird, die in der elektronischen Steuereinheit gespeichert wird, abhängig von dem gemessenen Druck (P) der Kontaktfläche (S) und geometrischen und physikalischen Parametern des Reifens.

8. Fahrzeug gemäß Anspruch 6 oder 7, bei welchem die Last (F), die auf jedes Rad (3) wirkt, anhand von Tabellenwerten geschätzt wird, die in der elektronischen Steuereinheit für einen bestimmten Reifen gespeichert sind und welche den gemessenen Druck (P) und die Kontaktfläche (S) in eine Beziehung zueinander setzen.

9. Fahrzeug gemäß einem der vorhergehenden Ansprüche, bei welchem die Steuereinheit dazu ausgebildet ist, das Gewicht des Fahrzeugs entsprechend einem vorbestimmten Zustand zu schätzen.

10. Fahrzeug gemäß Anspruch 9, bei welchem der vorbestimmte Zustand ein vorbestimmtes Zeitintervall oder eine vom Fahrzeug zurückgelegte vorbestimmte Wegstrecke ist.

11. Verfahren zur Schätzung des Gewichts eines Fahrzeugs, umfassend die folgenden Schritte:
- (i) Erfassung eines Bildes jedes Rades eines Fahrzeugs,
- (ii) Schätzen belasteter geometrischer Parameter des Rades als Funktion des in Schritt (i) erfassten Bildes und als Funktion gespeicherter vorbestimmter geometrischer Parameter des Rades;
- (iii) Schätzung einer Bodenkontaktfläche als Funktion der belasteten geometrischen Parameter, die in Schritt (ii) geschätzt wurden;
- (iv) Erfassung von Daten bezüglich des Druckwerts innerhalb des Rades;
- (v) Schätzung der auf jedes Rad wirkenden Kraft als Funktion der in Schritt (iii) geschätzten Bodenkontaktfläche und der in Schritt (iv) ermittelten Daten bezüglich des Drucks;
- (vi) Berechnung des Gewichts des Fahrzeugs als Funktion der in Schritt (v) geschätzten Kräfte.

12. Verfahren gemäß Anspruch 11, bei welchem Schritt (vi) die folgenden Schritte umfasst:
- (vi-a) Berechnung der Kraft auf jede Achse als Funktion der auf jedes Rad wirkenden Kraft und des Querabstands zwischen den Rädern des Fahrzeugs, und
- (vi-b) Berechnung des Gewichts des Fahrzeugs als Funktion der auf jede Achse wirkenden Kraft und des Längsabstands zwischen den Achsen.

13. Elektronische Steuereinheit für ein Fahrzeug, umfassend Verarbeitungsmittel, ausgebildet zur Speicherung eines Softwarecodes, ausgebildet zur Ausführung des Verfahrens gemäß den Ansprüchen 11 oder 12.

## Revendications

1. Véhicule (1) doté d'un châssis (2) qui est mobile sur le sol via une pluralité de roues (3) portées par des essieux (4) reliés au châssis (2) via un train de roues (5) respectif, chaque roue étant dotée de moyens capteurs de pression configurés pour acquérir des données liées à la pression (P) de ladite roue (3),
ledit véhicule (1) comprenant un système de pesée (6) comprenant des moyens d'acquisition d'image (7) pour chacune desdites roues (3) et une unité de commande électronique reliée électroniquement auxdits moyens d'acquisition d'image (7) et auxdits moyens capteurs de pression,
dans lequel lesdits moyens d'acquisition d'image (7) sont portés par ledit châssis (2) et configurés pour acquérir une image de la roue (3) respective dans une direction longitudinale dudit véhicule (1),
dans lequel ladite unité de commande électronique comprend des moyens d'élaboration configurés pour mémoriser des paramètres dimensionnels dudit véhicule (1) et configurés pour élaborer ladite image acquise par lesdits moyens d'acquisition d'image (7) en fonction desdits paramètres dimensionnels,
**caractérisé en ce que** ladite unité de commande électronique étant configurée pour estimer la charge (F) agissant sur ladite roue (3) sur la base de ladite pression (P) de ladite roue (3) et sur la base de ladite élaboration de ladite image acquise par lesdits moyens d'acquisition d'image (7),
ladite unité de commande électronique étant configurée pour estimer le poids dudit véhicule (1) sur la base de la charge (F) agissant sur chaque roue (3).

2. Véhicule selon la revendication 1, dans lequel lesdits moyens d'acquisition d'image (7) comprennent une caméra.

3. Véhicule selon la revendication 1 ou 2, dans lequel ladite unité de commande électronique est une ECU dudit véhicule (1).

4. Véhicule selon l'une quelconque des revendications 1 à 3, dans lequel lesdits moyens capteurs font partie d'un système de gestion de pression de pneus, TPMS, dudit véhicule (1).

5. Véhicule selon l'une quelconque des revendications précédentes, dans lequel lesdits paramètres dimensionnels dudit véhicule (1) comprennent au moins la distance longitudinale desdits moyens d'acquisition d'image (7) par rapport à l'essieu (4) respectif, le rayon externe (R) de ladite roue (3) et une distance verticale entre la surface externe de ladite roue (3) et une partie fixée audit châssis (2) conformément à un état de charge préétabli dudit véhicule.

6. Véhicule selon l'une quelconque des revendications précédentes, dans lequel ladite élaboration de ladite image acquise par lesdits moyens d'acquisition d'image (7) en fonction desdits paramètres dimensionnels par ladite unité de commande électronique vise à estimer la zone de contact (S) de ladite roue (3) sur le sol (G).

7. Véhicule selon la revendication 6, dans lequel ladite charge (F) agissant sur ladite roue (3) est estimée par une fonction mathématique, mémorisée dans ladite unité de commande électronique, suivant ladite pression (P) détectée, ladite zone de contact (S) et des paramètres géométriques et physiques de pneu.

8. Véhicule selon la revendication 6 ou 7, dans lequel ladite charge (F) agissant sur ladite roue (3) est estimée par des valeurs organisées, mémorisées dans ladite unité de commande électronique pour un pneu spécifique, qui associent ladite pression (P) détectée et ladite zone de contact (S).

9. Véhicule selon l'une quelconque des revendications précédentes, dans lequel l'unité de commande est configurée pour estimer le poids dudit véhicule conformément à une condition prédéfinie.

10. Véhicule selon la revendication 9, dans lequel ladite condition prédéfinie peut être un intervalle de temps préétabli ou une distance préétablie parcourue par ledit véhicule.

11. Méthode pour estimer le poids d'un véhicule comprenant les étapes suivantes :
• (i) l'acquisition d'une image de chaque roue d'un véhicule ;
• (ii) l'estimation de paramètres géométriques chargés de la roue en fonction de l'image acquise à l'étape (i) et en fonction de paramètres géométriques préétablis mémorisés de la roue ;
• (iii) l'estimation d'une zone de contact avec le sol en fonction des paramètres géométriques chargés estimés à l'étape (ii) ;
• (iv) l'acquisition de données liées à la valeur de pression dans ladite roue ;
• (v) l'estimation de la force agissant sur chaque roue en fonction de la zone de contact avec le sol estimée à l'étape (iii) et des données liées à la pression acquises à l'étape (iv) ;
• (vi) le calcul du poids du véhicule en fonction des forces estimées à l'étape (v).

12. Méthode selon la revendication 11, dans laquelle ladite étape (vi) comprenant les étapes suivantes :
• (vi-a) le calcul de la force sur chaque essieu en fonction de la force agissant sur chaque roue et de la distance transversale entre les roues portées par le véhicule ; et
• (vi-b) le calcul du poids du véhicule en fonction de la force agissant sur chaque essieu et de la distance longitudinale entre ces essieux.

13. Unité de commande électronique pour un véhicule comprenant des moyens d'élaboration configurés pour mémoriser un code de logiciel configuré pour exécuter la méthode selon les revendications 11 ou 12.
